# EUROPÄISCHE PATENTSCHRIFT

(11) **EP 2 494 327 B1**
(45) Veröffentlichungstag und Bekanntmachung des Hinweises auf die Patenterteilung: **04.12.2013**
(21) Anmeldenummer: 10773300.8
(22) Anmeldetag: 29.10.2010
(51) Int. Cl.: G01M 1/16

(54) **WUCHTMASCHINE MIT AUTOMATISIERTER UMSCHLAGMESSUNG**
BALANCING MACHINE WITH AUTOMATIC INDEX MEASURING
ÉQUILIBREUSE À MESURE D'ENVELOPPE AUTOMATISÉE

(30) Priorität: 30.10.2009 DE 202009014715 U; 04.12.2009 DE 202009016532 U
(43) Veröffentlichungstag der Anmeldung: 05.09.2012
(73) Patentinhaber: Franz Haimer Maschinenbau KG, 86568 Hollenbach-Igenhausen (DE)
(72) Erfinder: HAIMER, Franz, 86568 Hollenbach (DE)
(74) Vertreter: Misselhorn, Hein-Martin
(86) Internationale Anmeldenummer: PCT/EP2010/066494
(87) Internationale Veröffentlichungsnummer: WO 2011/051460

(56) Entgegenhaltungen:
- DE-A1- 10 233 917
- DE-B3-102007 030 916

## Beschreibung

Die Erfindung betrifft eine Wuchtmaschine nach dem Oberbegriff des Anspruchs 1.

Zerspanungswerkzeuge für moderne Bearbeitungszentren werden im Regelfall in Werkzeughalter eingespannt und mit Hilfe dieser Werkzeughalter mit den Arbeitsspindeln der Bearbeitungszentren verbunden. An die Rundlaufgenauigkeit der Einheit aus dem Zerspanungswerkzeug und dem Werkzeughalter werden hohe Anforderungen gestellt. Auf Grund dessen ist es üblich, dass die Werkzeughalter nach dem Einspannen eines neuen Werkzeugs ausgewuchtet werden.

Das Auswuchten erfolgt auf Auswuchtmaschinen, in denen die Werkzeughalter zusammen mit dem in sie eingesetzten Werkzeug in Rotation versetzt werden. Die durch die noch vorhandene Unwucht entstehenden Kräfte werden präzise aufgenommen und geben genauen Aufschluss über die Lage und das Maß der Unwucht (vgl. Patentanmeldung DE 102 33 917, Patent DE 10 2007 030 916 und internationale Patentanmeldung WO 00/45983).

Standardmäßig werden die Werkzeughalter in die Spindel der Auswuchtmaschine eingesetzt und dann um ihre Betriebsdrehachse in Rotation versetzt, woraufhin einmalig eine Messung vorgenommen wird, anhand derer dann das Maß und die Lage der Unwucht bestimmt werden.

Dort, wo ein größtmöglicher Grad an Präzision beim Auswuchten sichergestellt werden soll, wird eine sog. Umschlagmessung vorgenommen.

Im Rahmen einer solchen Umschlagmessung wird der Werkzeughalter in einer ersten Position in die Spindel eingebaut und dann von der Spindel in Rotation versetzt. Im Zuge dessen wird ein erster Messdurchgang durchgeführt. Dann wird die Wuchtmaschine stillgesetzt und der Werkzeughalter in einer zweiten, meist um 180 Grad relativ zur Spindel verdrehten Position in die Spindel eingebaut, was im Regelfall von Hand geschieht. Die Spindel wird nun erneut in Rotation versetzt und es wird ein zweiter Messdurchgang durchgeführt. An Hand der bei diesen beiden Messdurchgängen gewonnenen Messwerte lassen sich die Lage und das Maß der Unwucht besonders präzise feststellen.

Der Umbau von Hand ist arbeitsintensiv, zeitraubend und zumindest in manchen Fällen auch für die Präzision abträglich. Dies leuchtet ein, wenn man sich vergegenwärtigt, dass es aus den verschiedensten Gründen immer wieder einmal sein kann, dass der Werkzeughalter durch sein Lösen von der Spindel und den späteren Wiedereinbau nicht mehr vollständig in seiner Idealposition zu liegen kommt, die er während des ersten Messdurchgangs hatte oder umgekehrt.

Um den Personalaufwand möglichst klein zu halten ist intern auch schon die Idee erwogen worden, die Werkzeughalter nicht von Hand umzusetzen, sondern hierzu einen der Wuchtmaschine beigeordneten Industrieroboter zu verwenden, der die manuelle Manipulation nachahmt, jedoch schneller und mit größerer Präzision arbeitet. Ob diese Idee schon an anderer Stelle veröffentlicht worden ist, ist der Anmelderin nicht bekannt.

Wie dem auch sei, eine solche Lösung ist nachteilig, da sie einen hohen Maschinenaufwand erfordert und sich auch hier nicht ganz ausschließen lässt, dass es zu Lageabweichungen des Werkzeughalters beim Wiedereinbau kommt. Auch unter dem Gesichtspunkt der Taktzeitverkürzung ist der Einsatz eines der Wuchtmaschine beigeordneten Industrieroboters nicht befriedigend, da der Arm eines solchen Industrieroboters schon dadurch, dass er mit einer mehrachsigen Bewegung an den Werkzeughalter herangefahren werden muss und später wieder zurückgezogen werden muss bei jedem Takt erhebliche Zeit verliert. Außerdem erzwingt ein von außen her zugreifender Roboterarm bei jedem Zugriff ein Öffnen und Wiederschließen der Schutzhaube, was ebenfalls Zeit kostet bzw. den maschinenseitigen Aufwand vergrößert.

Angesichts dessen ist es die Aufgabe der Erfindung eine Wuchtmaschine zu schaffen mit deren Hilfe schnell und mit geringem Aufwand eine Umschlagmessung durchgeführt werden kann.

Diese Aufgabe wird mit den Merkmalen des Anspruchs 1 gelöst.

Die erfindungsgemäße Wuchtmaschine zeichnet sich dadurch aus, dass die Vorrichtung eine auf den Werkzeughalter einwirkende Bremse aufweist, welche so gestaltet ist, dass bei gelüfteter Kupplung durch die Drehung der Spindel eine Relativbewegung zwischen dem Werkzeughalter und der Spindel erzeugt werden kann, ohne dass der Werkzeughalter vollständig aus der Spindel entnommen wird.

In manchen Fällen ist die Bremse sogar so gestaltet, dass der Werkzeughalter beim Umschlag gegenüber der Spindel überhaupt nicht translatorisch bewegt wird, sondern sie stattdessen eine reine Drehbewegung des Werkzeughalters relativ zur Spindel erzwingt. In anderen Fällen ist die Bremse so gestaltet, dass sie eine gewisse Hubbewegung (vorzugsweise zwischen ca. 1/10 mm und 1,5 mm, in manchen Fällen bis zu 15 mm) in Richtung der Spindeldrehachse ausführt um den Werkzeughalter aus seinem Sitz in der Spindel zu lösen und so die eine Relativdrehung behindernden Reibungskräfte zwischen dem Werkzeughalter und der Spindel zu verringern, im Regelfall jedoch ohne den Werkzeughalter vollständig aus der Spindel herauszuziehen.

Der Grundgedanke ist also der, den Werkzeughalter zum Zwecke des Umschlags kurz so abzukuppeln, so dass er nicht mehr unüberwindbar fest mit der Spindel verbunden ist, und dann so festzuhalten, dass sich die Spindel unter Überwindung einer eventuellen Reibung zwischen dem Werkzeughalter und der Spindel um ein vorbestimmtes Stück weiterdrehen kann.

Die Stärke der Erfindung liegt darin, dass nur ein Minimum an Bewegungen ausgeführt werden muss und nur kleine Bewegungswege zurückgelegt werden müssen um den Umschlag zu bewerkstelligen.

Es leuchtet ein, dass auch die Bremse vorzugsweise so gestaltet ist, dass ihre beweglichen Teile nur einem kleinen Weg zwischen der gelüfteten Position der Bremse und der an den Werkzeughalter angelegten Position der Bremse zurückzulegen haben.

Im Idealfall wird wirklich nur die Verdrehfestigkeit der Verbindung zwischen dem Werkzeughalter und der Spindel aufgehoben, während die Spindel ansonsten auch während des Umschlags weiterhin die Lage des Werkzeughalters bestimmt, das heißt der Werkzeughalter wird für den Umschlag nicht aus seinem Sitz an der Spindel herausgezogen. Hierdurch wird die Gefahr verringert, dass es allein schon durch den Ausbau und den nachfolgenden Wiedereinbau der Spindel zu einem Lagefehler des Werkzeughalters kommt.

Auf Grund der Tatsache, dass die erfindungsgemäße Bremse den Werkzeughalter im Regelfall nicht als Ganzes handhaben muss, sondern ihn lediglich daran zu hindern hat mit der Spindel mitzudrehen, kann die Bremse wesentlich leichter und damit mit wesentlich geringerem Materialaufwand verwirklicht werden, als der mehrachsig bewegbare Manipulator eines Industrieroboters.

Im Regelfall ist die Bremse sehr kompakt ausgebildet und unmittelbar im Nahbereich der Spindel angebracht, so dass sie vollständig unter der Schutzhaube Platz findet, die die Spindel beim Wuchten gegenüber der Umgebung abschließt.

Vorzugsweise ist die Bremse als zangenartiger Greifer ausgebildet, der mit dem Werkzeughalter interagiert, indem er sich von zwei Seiten her an den Umfang des Werkzeughalters anlegt. Auf diese Art und Weise kann der Werkzeughalter an einem Mitdrehen mit der Spindel gehindert werden, ohne dass die Spindel mit nennenswerten Querkräften belastet wird. Vielmehr heben sich die Querkräfte, die die beiden Klemmbacken des zangenartigen Greifers erzeugen, gegeneinander auf.

Vorzugsweise ist der Greifer so angeordnet und gestaltet, dass er bei geöffneter Sicherheitshaube direkt und ohne Entfernung weiterer Verkleidungsteile für den Maschinenbediener zugänglich ist und bei geschlossener Schutzhaube vollständig unter der Schutzhaube angeordnet ist. Auf diese Art und Weise braucht der Bediener nur die Schutzhaube aufzuklappen, um den zangenartigen Greifer einrichten zu können, etwa um die Klemmbacken auszutauschen und so die Wuchtmaschine für des Wuchten eines andersartigen Werkzeughalters einzurichten.

Im Rahmen einer vorteilhaften Weiterbildung ist vorgesehen, dass der Greifer einen Satz gegeneinander auswechselbarer Klemmbacken aufweist, die jeweils paarweise an die unterschiedliche Kontur verschiedener Werkzeughalter angepasst sind. Vorzugsweise können die auswechselbaren Klemmbacken auf Grund einer entsprechenden Ausgestaltung werkzeuglos am Greifer befestigt und wieder von ihm abgenommen werden.

Hierdurch wird es möglich Werkzeughalter mit sehr unterschiedlichen Durchmessern zu vermessen und zu Wuchten, ohne dass der Greifer einen großen Öffnungs- und Schließhub haben muss, wie das sonst erforderlich wäre, wenn ein und derselbe Greifer unverändert in der Lage sein muss Werkzeughalter mit den unterschiedlichsten Durchmessern zu greifen und festzuhalten.

Vorzugsweise ist der Greifer relativ zum Werkzeughalter derart schwenkbar gelagert, dass die Klemmbacken im Zuge ihres Anlegens an den Werkzeughalter keine wesentliche Querkraft auf den Werkzeughalter ausüben. Der Greifer ist auf Grund seiner Schwenkbarkeit in der Lage sich allein durch das Schließen seiner Klemmbacken gegenüber dem Werkzeughalter zu "zentrieren", so dass jede der beiden Klemmbacken mit im Wesentlichen der gleichen Kraft gegen den Werkzeughalter anliegt. Auf diese Art und Weise wird verhindert, ist der Greifer durch sein Schließen Einfluss auf die Position des Werkzeughalters nimmt.

Idealerweise ist die Bremse auf einer in der Umgebung der Spindel befestigten Montageplatte angeordnet, die einen Ausschnitt aufweist, der eine Beschickungsöffnung für die Spindel freilässt. Auf diese Art und Weise stellt die Bremse eine eigenständige Baugruppe daher, die ohne weiteres auch nachträglich an vorhandenen Wuchtmaschinen nachgerüstet werden kann.

Weitere Ausgestaltungsmöglichkeiten, Funktionsweisen und Vorteile der Erfindung ergeben sich aus der Beschreibung der nachfolgenden Ausführungsbeispiele, die an Hand verschiedener Figuren erfolgt.

Die Figur 1 zeigt eine Gesamtansicht einer Auswuchtstation mit einer erfindungsgemäßen Wuchtmaschine.

Die Figur 2 zeigt einen Ausschnitt aus der Figur 1, der nähere Details der erfindungsgemäßen Wuchtmaschine offenbart.

Die Figur 3 zeigt einen Ausschnitt aus der Figur 2 von oben her gesehen und offenbart wiederum nähere Details zu der erfindungsgemäßen Bremse in Gestalt eines zangenartigen Greifers.

Die Figur 4 zeigt weitere Details zu der erfindungsgemäßen Bremse in Gestalt eines zangenartigen Greifers, der hier von der Seite her gesehenen explodiert dargestellt ist.

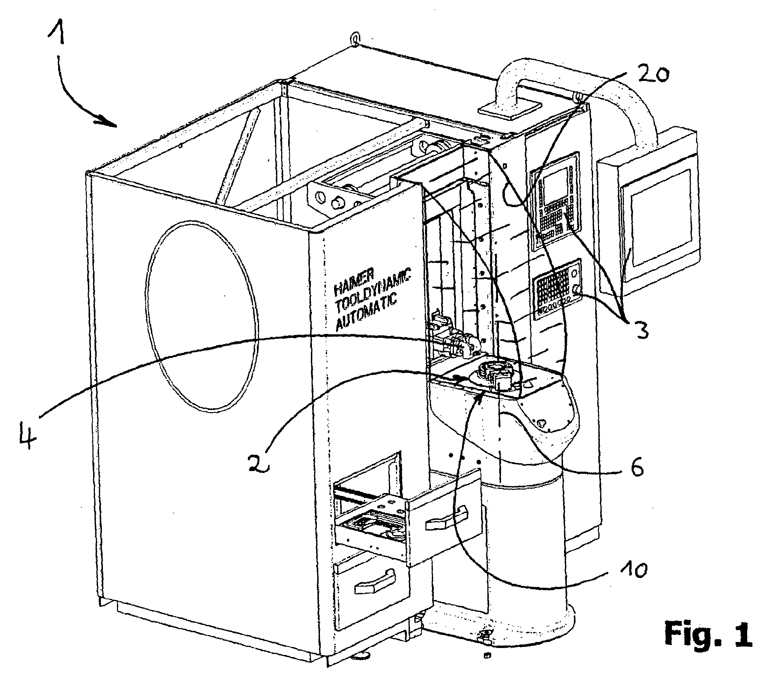

Der Figur 1 zeigt eine Auswuchtstation 1. Diese Auswuchtstation 1 besteht aus einem Gehäuse, in das unter anderem die eigentliche Wuchtmaschine 2, verschiedene Eingabe- und Ausgabeeinheiten 3 und eine Bohrmaschine zur Abnahme von Material am Werkzeughalter zum Zwecke des Auswuchten integriert ist. Von der Bohrmaschine sieht man hier nur die Absauganlage 4 deutlich. Sie dient zum Entfernen der durch jede Bohrung frei werdenden Späne.

Die eigentliche Wuchtmaschine 2 befindet sich in dem tischartig nach außen über die Front des restlichen Gehäuses hervorspringenden Gehäuseteil. Nur die Spindel 5 der Wuchtmaschine 2 ragt nach außen aus dem Gehäuse heraus. Die Spindel 5 rotiert beim Wuchten um die Spindeldrehachse 6. Die eigentliche Wuchtmaschine 2 ist vorzugsweise so konstruiert, wie die von der Patentanmeldung DE 102 33 917 im Einzelnen beschriebe Wuchtmaschine.

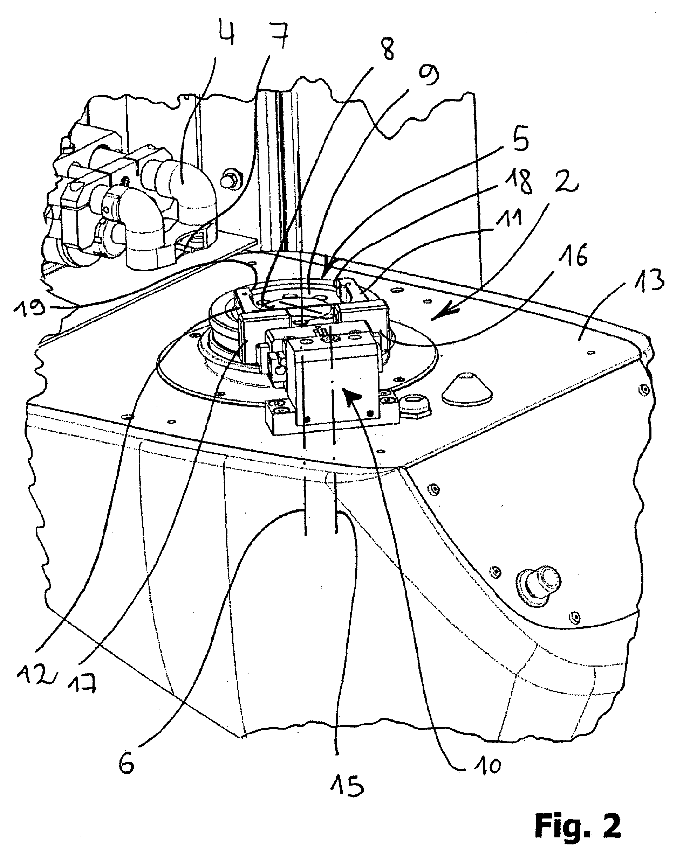

Die Figur 2 zeigt eine ausschnittweise Nahaufnahme der Wuchtmaschine 2. Gut zu sehen sind hier die Spindel 5, ihre Spindeldrehachse 6 und die Umgebung der Spindel 5. Erneut und etwas genauer zu sehen ist die Absauganlage 4, aus der der Bohrer 7 herausragt.

Die innenliegende und daher in Fig. 2 nicht zu erkennende Spindelklemmung, die zur Verbindung des Werkzeughalters mit der Spindel dient, ist vorzugsweise so ausgestaltet, wie von der internationalen Patentanmeldung WO 00/45983 beschrieben.

Der zu vermessende und auszuwuchtende Werkzeughalter wird von oben in die Spindelöffnung 8 eingesetzt und dann an der Spindel 5 festgesetzt, beispielsweise so, wie von Fig. 1 der genannten internationalen Patentanmeldung gezeigt. Dabei weist der in den Figuren nicht gezeigte Werkzeughalter (vgl. aber WO 00/45983, Fig. 1) im Regelfall eine sich in radialer Richtung erstreckende Kreisringfläche auf, mit der der Werkzeughalter auf der oberen Stirnfläche 9 der Spindel aufsitzt. Darüber hinaus weist er einen kegelförmigen Abschnitt auf, mit dem er in einen komplementären kegelförmigen Sitz der Spindel 5 hineinragt, der zentrierend wirkt. In die von diesem kegelförmigen Sitz umschlossene Öffnung des Werkzeughalters greift eine hier in Gestalt einer Spannzange ausgeführte Kupplung ein, die den Werkzeughalter nach unten gegen die Spindel zieht und an dieser reibschlüssig festsetzt. Solange die Spannzange keine Zugkraft ausübt wird der Werkzeughalter von der Spindel 5 in Position gehalten, lässt sich aber relativ zur Spindel 5 verdrehen, sobald entsprechenden die Reibungskräfte überwunden werden.

Um die Umschlagmessung automatisiert und ohne weiteres Zutun des Maschinenbedieners durchführen zu können ist eine Bremse 10 vorgesehen. Mittels dieser Bremse kann der Werkzeughalter festgehalten werden, während der Spindelmotor die Spindel 5 um ein von der Maschinensteuerung vorgegebenes Stück weiterdreht (im Regelfall eine halbe Spindelumdrehung).

Diese Bremse 10 ist bei dem vorliegenden Ausführungsbeispiel als zangenartiger Greifer ausgeführt, der mit zwei Klemmbacken 11, 12 ausgestattet ist. Im geöffneten Zustand werden die Klemmbacken 11, 12 soweit auseinandergefahren, dass der Werkzeughalter ungehindert zwischen den Klemmbacken hindurch in die Spindelöffnung 8 eingesetzt und auch wieder aus ihr herausgezogen werden kann. Im geschlossenen Zustand legen sich die Klemmbacken an zwei diametral gegenüberliegenden Stellen an den Umfang des Werkzeughalters an und hindern den Werkzeughalter dann daran zusammen mit der Spindel weiterzudrehen. Im einfachsten Fall ist der zangenartige Greifer, abgesehen von der Bewegung, mit der er seine Klemmbacken öffnet und schließt, völlig unbeweglich ausgeführt und daher gleichermaßen einfach und zuverlässig wie preisgünstig gestaltet, was im Sinne einer optionalen Zusatzausstattung nicht ausschließt, dass er jedoch den Werkzeughalter ein Stück anzuheben vermag.

In der Fig. 1 ist angedeutet, dass der Bereich oberhalb der Spindel 2 durch eine Abdeckhaube 20 abgedeckt ist, die nur zum Einsetzen und Wiederherausnehmen des jeweiligen Werkzeughalters geöffnet wird. Der entscheidende Punkt ist, dass die Bremse 10 so kompakt ausgestaltet ist, dass sie innerhalb des von der Abdeckhaube 20 abgeschlossenen Bereichs angeordnet werden kann. Auf Grund dessen kann die Bremse 10 aktiviert werden ohne die Abdeckhaube zu diesem Zweck öffnen und wieder schließen müssen. Hierdurch wird die Handhabung vereinfacht und vor allem Zeit gewonnen.

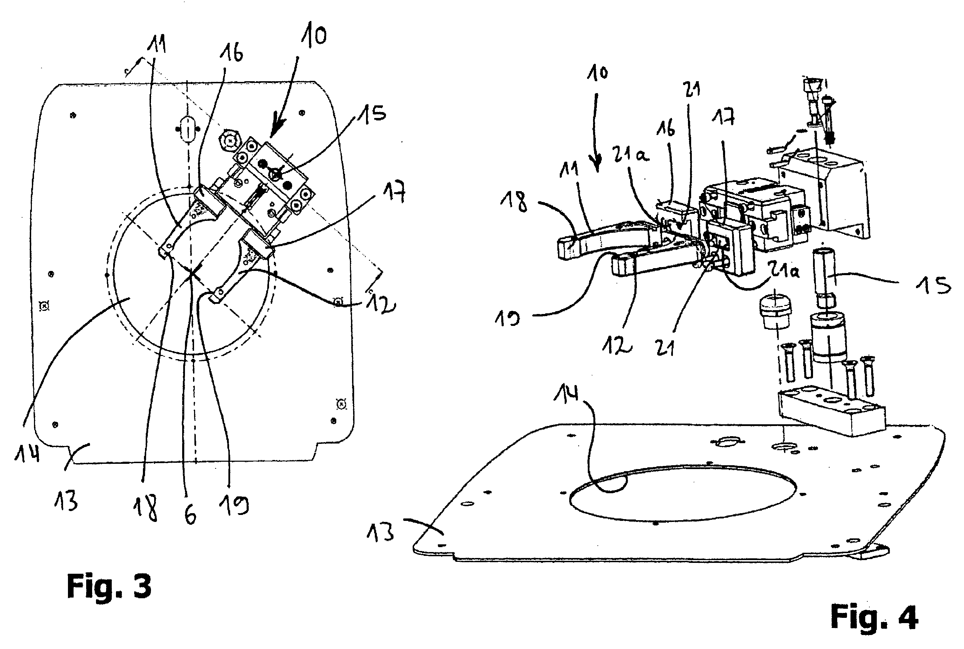

Die Einzelheiten der Bremse 10, die hier in Gestalt des zangenartigen Greifers ausgeführt ist, zeigen die Fig. 3 und 4.

Wie insbesondere die Fig. 4 zeigt ist der zangenartige Greifer auf einer Montageplatte 13 montiert, die zum Zwecke der Nachrüstung bestehender Wuchtmaschinen mit ihrer Öffnung 14 über die aus dem übrigen Gehäuse herausragende Spindel 5 "gestülpt" und in der Umgebung der Spindel befestigt werden kann. Dabei ist der zangenartige Greifer im Fall des hier gezeigten Ausführungsbeispiels um die Greiferachse 15 schwenkbar an der Montageplatte 13 befestigt, so dass sich der zangenartige Greifer selbst gegenüber der Spindel bzw. dem Spindelsitz "zentrieren" kann. Dies ist besonders für diejenigen Varianten wichtig, bei denen der Greifer mit einer Hubfunktion versehen ist mittels derer der Werkzeughalter um ein kleines Stück angehoben werden kann um den Werkzeughalter aus seinem Sitz in der Spindel zu lösen. Dabei kann koaxial zur Greiferachse 15 ein vorzugsweise pneumatisch betätigbarer Zylinder eingebaut sein, mit Hilfe dessen die fallweise relativ hohen Kräfte aufgebracht werden können, die erforderlich sind um den Werkzeughalter aus seinem Sitz in der Spindel zu lösen - wobei der Zylinder ggf. dann auch gleich die Schwenkbarkeit um die Greiferachse 15 gewährleistet.

Bemerkenswert ist, dass der Greifer außer zum Schließen seiner Klemmbacken und ggf. zum Anheben des Werkzeughalters keinen externen Antrieb benötigt.

Wie man an Hand der Fig. 3 sieht sind die Klemmbacken mit an den jeweiligen Werkzeughalter angepassten Klemmflächen 18 und 19 versehen, mit denen sie sich an zwei sich gegenüber der Spindeldrehachse 6 diametral gegenüberliegenden Stellen an den Werkzeughalter anlegen, wobei die Klemmflächen 18 und 19 vorzugsweise symmetrisch zur Spindeldrehachse 6 liegen.

An Hand der Fig. 4 erkennt man, dass die Klemmbacken bei diesem Ausführungsbeispiel austauschbar sind - die dem Werkzeughalter abgewandten Enden der Klemmbacken sind so ausgebildet, dass sie formschlüssig in die hierfür vorgesehenen Aufnahmen 21 an den beweglichen Aktuatorplatten 16, 17 eingesetzt werden können, vorzugsweise derart, dass sie durch das Schließen der Klemmbacken gegen das Ende 21a der hier durch Nuten gebildeten Aufnahmen 21 gedrückt werden. Eine derartige Austauschbarkeit der Klemmbacken hat den großen Vorteil, dass der zangenartige Greifer, obwohl er nur einen sehr kleinen Öffnungs- und Schließhub ausführt, Werkzeughalter mit den unterschiedlichsten Durchmessern festsetzen kann.

Die Unwuchtmessung wird wie folgt durchgeführt:
Der Werkzeughalter wird in die Spindel 5 eingesetzt, wie oben beschrieben. Die Kupplung in Gestalt der Spannzange wird angezogen und zieht den Werkzeughalter gegen die Spindel 5, so dass dieser reibschlüssig und/oder formschlüssig in der Spindel 5 festgesetzt ist. Die Spindel und der Werkzeughalter werden gemeinsam in Rotation versetzt, es findet ein erster Messdurchgang statt bei dem ein erstes Mal die Lage und der Betrag der Unwucht bestimmt werden.

Sodann wird der Spindelantrieb abgeschaltet und die Spindel zum Stillstand gebracht. Nun wird die Bremse 10 in Gestalt des zangenartigen Greifers aktiviert. Dies erfolgt, indem die Klemmbacken gegen die entsprechenden Flächen am Umfang des Werkzeughalters gepresst werden. Als Nächstes wird der von der Spannzange ausgeübte Zug aufgehoben, so dass der Werkzeughalter nicht länger verdrehfest gegen die Spindel gezogen wird, sondern nun nur noch durch sein Eigengewicht in der Aufnahme der Spindel 5 ruht. Alternativ wäre auch eine über Formschluss wirksam werdende Bremse möglich, z. B. in Form einer Sperrklinke, die in eine Ausnehmung des Rotors eingreift.

Optional kann die Bremse 10 in Gestalt des zangenartigen Greifers so ausgebildet sein, dass sie den Werkzeughalter nun um ein kleines Stück anhebt, um den Werkzeughalter gegenüber dem Sitz in der Spindel zu lösen und die Reibungskräfte zwischen dem Werkzeughalter und dem Sitz in der Spindel zu vermindern. In andern Fällen ist der zangenartige Greifer jedoch so gestaltet und dimensioniert, dass er den Werkzeughalter auch ohne dass zuvor ein solches Anheben ausgeführt wird, an einem Mitdrehen mit der Spindel hindern kann, so dass der Umschlag stattfinden kann ohne dass der Werkzeughalter vollständig aus seinem Sitz gegenüber der Spindel gelöst worden ist. Alternativ könnte auch das Spannsystem so ausgeführt sein, dass es beim Lösevorgang das Werkzeug etwas anhebt, um den Reibschluss aufzuheben.
Bei formschlüssiger Spannung kann das Werkzeug so weit angehoben werden, dass die Formschlusselemente außer Eingriff geraten.

Daraufhin wird der Spindelantrieb wieder aktiviert und die Spindel um ein von der Maschinensteuerung vorgegebenes Stück gedreht. Da der Werkzeughalter von der Bremse 10 daran gehindert wird mitzudrehen verdrehen sich der Werkzeughalter und die Spindel um ein entsprechendes Maß relativ zueinander. Im Anschluss daran wird wieder Zug auf die Spannzangen gegeben, so dass der Werkzeughalter wieder verdrehfest an der Spindel 5 festgesetzt wird.

Die Spindel und der Werkzeughalter werden nun wieder gemeinsam in Rotation versetzt. Dabei findet ein zweiter Messdurchgang statt, bei dem ein zweites Mal die Lage und der Betrag der Unwucht bestimmt werden.

Im Anschluss wird der Werkzeughalter ausgewuchtet. Zu diesem Zweck wird bevorzugterweise die maschineneigene Bohrmaschine aktiviert, die an entsprechender Stelle eine Bohrung in den Werkzeughalter einbringt und dabei im für die Auswuchtung notwendigen Umfang Material abnimmt.

Mit Hilfe der Erfindung ist also möglich eine vollautomatisch arbeitende Wuchtmaschine zur Verfügung zu stellen, die ohne Zutun des Bedieners und mit geringem apparativem Aufwand eine Wuchtung mit Umschlagmessung durchführt. Der Bediener muss lediglich eingeben welchen Typ Werkzeughalter er momentan vermessen und auswuchten lassen will und dann diesen Werkzeughalter in die Maschine einsetzen und später wieder aus der Maschine entnehmen.

Bei preisgünstigeren Wuchtmaschinen des erfindungsgemäßen Typs wird dem Bediener mittels einer Lichtmarke (meist Laser) die Stelle angezeigt, an der er ein Wuchtgewicht anbringen muss (beispielsweise indem er eine Madenschraube in ein zu diesem Zweck am Werkzeughalter bereits vorhandenes Gewinde schraubt) und über das Display die Information gegeben, welche Masse das Wuchtgewicht haben muss, d. h. aus welcher der unterschiedlichen Gewichtsklassen er die einzudrehende Madenschraube auswählen muss.

Optimaler Weise ist die Bremse so ausgestaltet, dass sie (i. d. R. vollständig) von der Wuchtmaschine abgenommen werden kann, so dass die Wuchtmaschine problemlos auch für das Auswuchten sehr flacher Rotoren verwendet werden kann, die andernfalls im räumlichen Konflikt mit der Bremse kommen. Vorzugsweise sind die Bremse und/oder die Wuchtmaschine so ausgeführt, dass eine werkzeuglose Abnahme der Bremse ermöglichen.

Die erfindungsgemäße Wuchtmaschine ist im Regelfall speziell für das Auswuchten von Werkzeughaltern konzipiert. Ihr Konzept kann jedoch im Bedarfsfall analog auch für Maschinen eingesetzt werden auf denen andere Gegenstände als Werkzeughalter gewuchtet werden, worauf der Fachmann hiermit hingewiesen wird.

### Bezugszeichenliste

- 1: Auswuchtstation
- 2: Wuchtmaschine
- 3: Eingabe- und Ausgabeeinheiten
- 4: Absauganlage
- 5: Spindel
- 6: Spindeldrehachse
- 7: Bohrer
- 8: Spindelöffnung
- 9: Stirnfläche
- 10: Bremse
- 11: Klemmbacken
- 12: Klemmbacken
- 13: Montageplatte
- 14: Ausschnitt
- 15: Greiferachse
- 16: Aktuatorplatte
- 17: Aktuatorplatte
- 18: Klemmfläche
- 19: Klemmfläche
- 20: Sicherheitshaube

## Patentansprüche

1. Wuchtmaschine (2) zum Messen der Rotationsunwucht eines Werkzeughalters in zwei unterschiedlichen Aufspannungen (Umschlagmessung), umfassend eine in Rotation versetzbare Spindel (5) mit einer automatisch betätigbaren Kupplung mittels derer der Werkzeughalter in einer ersten Position fest an die Spindel (5) angekuppelt werden kann um zusammen mit der Spindel um seine Drehsachse zu rotieren (erster Messdurchgang) und in einer zweiten Position fest an die Spindel angekuppelt werden kann, um zusammen mit der Spindel um seine Drehsachse zu rotieren (zweiter Messdurchgang) und mindestens einen Messaufnehmer zur Bestimmung der Rotationsunwucht des in der Spindeleinheit rotierenden Werkzeughalters, **dadurch gekennzeichnet, dass** die Wuchtmaschine eine den Werkzeughalter festhaltende Bremse (10) aufweist, welche so ausgestaltet ist, dass bei gelüfteter Kupplung durch die Drehung der Spindel (5) eine definierte Relativbewegung zwischen dem Werkzeughalter und der Spindel erzeugt werden kann, vorzugsweise ohne dass der Werkzeughalter vollständig aus der Spindel entnommen wird.

2. Wuchtmaschine nach Anspruch 1, **dadurch gekennzeichnet, dass** die Wuchtmaschine eine Sicherheitshaube (20) aufweist und die Spindel (5) und die Bremse (10) so gestaltet und relativ zueinander positioniert sind, dass die Bremse (10) bestimmungsgemäß in Aktion treten kann, ohne dass die Schutzhaube zur gelüftet werden muss, um die Bremse in Aktion treten zu lassen.

3. Wuchtmaschine nach einem der vorhergehenden Ansprüche, **dadurch gekennzeichnet, dass** die Bremse (10) aus einem zangenartigen Greifer (11, 12, 16, 17, 18, 19) gebildet wird, der mit dem Werkzeughalter interagiert, indem er sich von zwei Seiten her an den Umfang des Werkzeughalters anlegt.

4. Wuchtmaschine nach Anspruch 3, **dadurch gekennzeichnet, dass** der Greifer (11, 12, 16, 17, 18, 19) so angeordnet ist, dass er bei geöffneter Sicherheitshaube (20) für den Maschinenbediener zugänglich ist und bei geschlossener Sicherheitshaube vollständig unter der Schutzhaube angeordnet ist.

5. Wuchtmaschine nach einem der Ansprüche 3 oder 4, **dadurch gekennzeichnet, dass** der Greifer (11, 12, 16, 17, 18, 19) einen Satz gegeneinander auswechselbarer Klemmbacken (11, 12) aufweist, die jeweils paarweise an die unterschiedliche Kontur verschiedener Werkzeughalter angepasst sind.

6. Wuchtmaschine nach einem der Ansprüche 3 bis 5 **dadurch gekennzeichnet, dass** der Greifer (11, 12, 16, 17, 18, 19) relativ zum Werkzeughalter derart schwenkbar gelagert ist, dass die Klemmbacken (11, 12) im Zuge ihres Anlegens an den Werkzeughalter keine wesentliche Querkraft auf den Werkzeughalter ausüben.

7. Wuchtmaschine nach einem der vorhergehenden Ansprüche, **dadurch gekennzeichnet, dass** die Bremse (10) auf einer in der Umgebung der Spindel (5) befestigten Montageplatte (13) angeordnet ist, die einen Ausschnitt (14) aufweist, der zumindest eine Beschickungsöffnung für die Spindel (5) freilässt.

8. Wuchtmaschine nach einem der vorhergehenden Ansprüche, **dadurch gekennzeichnet, dass** die Bremse durch Formschluss auf den Werkzeughalter einwirkt.

9. Wuchtmaschine nach einem der vorhergehenden Ansprüche, **dadurch gekennzeichnet, dass** der Reib- und/oder Formschluss des Werkzeughalters gegenüber der Spindel dadurch aufgehoben wird, dass der Werkzeughalter durch die Bremse angehoben wird.

10. Wuchtmaschine nach einem der vorgehenden Ansprüche, **dadurch gekennzeichnet, dass** der Reib- und/oder Formschluss des Werkzeughalters gegenüber der Spindel dadurch aufgehoben wird, dass der Werkzeughalter auch oder nur durch das ihn gegenüber der Spindel haltende Spannsystem angehoben wird.

## Claims

1. Balancing machine (2) for measuring the rotating unbalance of a tool holder in two different clampings (index measuring), comprising a spindle (5), which can be set into rotation and has an automatically actuatable coupling, by means of which the tool holder can be firmly coupled to the spindle (5) in a first position in order to rotate about its axis together with the spindle (first measurement cycle) and can be firmly coupled to the spindle in a second position in order to rotate about its axis together with the spindle (second measurement cycle), and at least one sensor for determining the rotating unbalance of the tool holder rotating in the spindle unit, **characterised in that** the balancing machine comprises a brake (10) which retains the tool holder and is configured in such a way that, when the coupling is released, a defined relative movement between the tool holder and the spindle can be generated by the rotation of the spindle (5) without the tool holder being removed completely from the spindle.

2. Balancing machine according to claim 1, **characterised in that** the balancing machine comprises a safety hood (20) and the spindle (5) and the brake (10) are configured and positioned relative to one another in such a way that the brake (10) can operate as intended without the protection hood having to be lifted in order to have the brake operate.

3. Balancing machine according to any one of the preceding claims, **characterised in that** the brake (10) is formed of a tong-like gripper (11, 12, 16, 17, 18, 19) that interacts with the tool holder by abutting against the circumference of the tool holder from two sides.

4. Balancing machine according to claim 3, **characterised in that** the gripper (11, 12, 16, 17, 18, 19) is disposed in such a way that it is accessible to the machine operator when the safety hood (20) is open, and that it is disposed completely under the protection hood when the safety hood is closed.

5. Balancing machine according to any one of the claims 3 or 4, **characterised in that** the gripper (11, 12, 16, 17, 18, 19) comprises a set of mutually interchangeable clamping jaws (11, 12) that are adapted, respectively in pairs, to the different contours of various tool holders.

6. Balancing machine according to any one of the claims 3 to 5, **characterised in that** the gripper (11, 12, 16, 17, 18, 19) is pivotally mounted, relative to the tool holder, in such a way that the clamping jaws (11, 12) do not exert any substantial lateral force on the tool holder in the process of their abutting against the tool holder.

7. Balancing machine according to any one of the preceding claims, **characterised in that** the brake (10) is disposed on a mounting plate (13) which is attached in the vicinity of the spindle (5) and has a cut-out section (14) which leaves at least one feeding opening for the spindle (5) free.

8. Balancing machine according to any one of the preceding claims, **characterised in that** the brake acts on the tool holder by positive fit.

9. Balancing machine according to any one of the preceding claims, **characterised in that** the frictional and/or positive fit of the tool holder in relation to the spindle is cancelled by the tool holder being lifted by the brake.

10. Balancing machine according to any one of the preceding claims, **characterised in that** the frictional and/or positive fit of the tool holder in relation to the spindle is cancelled by the tool holder being lifted also by or only by the clamping system retaining it in relation to the spindle.

## Revendications

1. Machine d'équilibrage (2) pour mesurer le balourd en rotation d'un porte-outils dans deux prises différentes (mesure avec inversion), comprenant une broche (5) susceptible d'être mise en rotation avec un accouplement à actionnement automatique au moyen duquel le porte-outils peut être couplé fermement à la broche (5) dans une première position afin de tourner conjointement avec la broche autour de son axe de rotation (première passe de mesure) et peut être couplé fermement à la broche dans une seconde position afin de tourner conjointement avec la broche autour de son axe de rotation (seconde passe de mesure), et au moins un capteur de mesure pour déterminer le balourd en rotation du porte-outils en rotation dans l'unité à broche, **caractérisée en ce que** la machine d'équilibrage comprend un frein (10) qui retient fermement le porte-outils et qui est conçu de telle façon que lorsque l'accouplement est dégagé un mouvement relatif défini peut être produit entre le porte-outils et la broche en raison de la rotation de la broche (5), de préférence sans que le porte-outils soit entièrement enlevé hors de la broche.

2. Machine d'équilibrage selon la revendication 1, **caractérisée en ce que** la machine d'équilibrage comprend un capot de sécurité (20), et **en ce que** la broche (5) et le frein (10) sont conçus et positionnés l'un par rapport à l'autre de telle façon que le frein (10) peut entrer en action conformément à sa destination sans que le capot de protection doive être soulevé pour laisser le frein entrer en action.

3. Machine d'équilibrage selon l'une des revendications précédentes, **caractérisée en ce que** le frein (10) est formé par un organe de saisie (11, 12, 16, 17, 18, 19) semblable à une pince, qui coopère avec le porte-outils en s'appliquant depuis les deux côtés contre la périphérie du porte-outils.

4. Machine d'équilibrage selon la revendication 3, **caractérisée en ce que** l'organe de saisie (11, 12, 16, 17, 18, 19) est ainsi agencé que lorsque le capot de sécurité (20) est ouvert, il est accessible pour l'opérateur de la machine et lorsque le capot de sécurité est fermé, il est entièrement agencé sous le capot de sécurité.

5. Machine d'équilibrage selon l'une des revendications 3 ou 4, **caractérisée en ce que** l'organe de saisie (11, 12, 16, 17, 18, 19) comprend un jeu de mâchoires de serrage (11, 12) mutuellement interchangeables, qui sont respectivement adaptées par paires aux contours différents de divers porte-outils.

6. Machine d'équilibrage selon l'une des revendications 3 à 5, **caractérisée en ce que** l'organe de saisie (11, 12, 16, 17, 18, 19) est monté avec possibilité de pivotement par rapport au porte-outils de telle façon que les mâchoires de serrage (11, 12) n'exercent pas une force transversale sensible sur le porte-outils au cours de leur application contre le porte-outils.

7. Machine d'équilibrage selon l'une des revendications précédentes, **caractérisée en ce que** le frein (10) est agencé sur une plaque de montage (13) fixée dans l'environnement de la broche (5) et comportant une découpe (14) qui libère au moins une ouverture de chargement pour la broche (5).

8. Machine d'équilibrage selon l'une des revendications précédentes, **caractérisée en ce que** le frein agit sur le porte-outils par coopération de formes.

9. Machine d'équilibrage selon l'une des revendications précédentes, **caractérisée en ce que** la coopération de friction et/ou de formes du porte-outils vis-à-vis de la broche peut être annulée du fait que le porte-outils est soulevé par le frein.

10. Machine d'équilibrage selon l'une des revendications précédentes, **caractérisée en ce que** la coopération de friction et/ou de formes du porte-outils vis-à-vis de la broche peut être annulée du fait que le porte-outils est soulevé également ou uniquement par le système de serrage qui le maintient vis-à-vis de la broche.
